# DEMANDE DE BREVET EUROPEEN

(11) **EP 0 527 090 A1**
(43) Date de publication de la demande: **10.02.1993**
(21) Numéro de dépôt: 92402251.0
(22) Date de dépôt: 07.08.1992
(51) Int. Cl.: F16L 19/02, F16B 37/00

(54) **Ecrou et son application à la fixation de pièces**

(30) Priorité: 07.08.1991 FR 9110214
(71) Demandeur: COMAP, F-69008 Lyon (FR)
(72) Inventeur: Ducrotoy, Lionel, F-45150 Ouvrouer les Champs (FR)
(74) Mandataire: Rodhain, Claude

(57) **Abrégé**

Dispositif d'emprisonnement d'un écrou (1) comportant des faces externes de manoeuvre (2), un alésage taraudé (3) de fixation et un alésage interne (4) débouchant par une première extrémité dans l'alésage taraudé (3) et, par une deuxième extrémité, à l'extérieur de l'écrou (1). Ledit dispositif d'emprisonnement présente un arbre (8) comprenant à une extrémité et dans un plan perpendiculaire à l'axe de l'alésage taraudé (3), un élargissement délimité par deux arcs d'un cercle (6), ses bords étant calibrés à une distance du centre de l'alésage, inférieure au rayon du cercle (6).

Application à la fixation de deux pièces entre elles.

## Description

La présente invention concerne un moyen d'emprisonnement d'un écrou. Elle se rapporte plus particulièrement à l'emprisonnement d'un écrou restant tournant.

On connaît des écrous tournants qui sont emprisonnés sur un raccord par l'ajout d'une pièce extérieure rapportée, telle qu'une collerette soudée sur ledit raccord.

On connaît également une technique de montage d'écrous tournants sur une pièce par déformation.

Pour cela, on coulisse l'écrou sur la pièce, puis cette dernière est déformée après le passage de l'écrou de manière à le maintenir prisonnier.

Ces techniques présentent des inconvénients.

La déformation ou l'ajout de pièce extérieure oblige à des opérations de montage et/ou d'usinage après l'installation de l'écrou à l'extrémité de ladite pièce devant être fixée à une autre pièce : ceci impose l'utilisation d'un outillage.

L'écrou doit ainsi être installé à l'extrémité de ladite pièce au moment de la fabrication et non de la fixation des deux produits entre eux.

De plus, l'écrou n'est pas démontable. L'invention vise à remédier à ces inconvénients. Elle a donc pour objet un moyen d'emprisonnement d'un écrou comportant des faces externes de manoeuvre, un alésage taraudé de fixation et un alésage interne débouchant par une première extrémité dans l'alésage taraudé et par une deuxième extrémité à l'extérieur de l'écrou. Ledit moyen d'emprisonnement comporte un arbre présentant un élargissement dans un plan perpendiculaire à son axe. L'élargissement est limité par deux arcs d'un cercle de centre confondu avec l'axe de l'arbre et entre les deux arcs du cercle des bords calibrés à une distance de l'axe de l'arbre inférieure au rayon du cercle.

On obtient ainsi un écrou pouvant être maintenu tournant sur une pièce devant être fixée à une autre pièce sans rapporter de deuxième pièce extérieure ou déformer l'écrou ou ladite pièce après l'installation de l'écrou à l'extrémité de ladite pièce et sans que l'on tourne les deux pièces l'une par rapport à l'autre lors de leur fixation.

Suivant d'autres caractéristiques :
- l'écrou selon l'invention comporte un alésage interne d'un diamètre inférieur à l'alésage taraudé et la plus grande distance des surfaces externes de l'élargissement par rapport à l'axe X-X est comprise entre les rayons de l'alésage interne (4) de d'écrou (1) et de l'alésage taraudé (3) de l'écrou (1) ;
- l'élargissement de l'arbre selon l'invention comporte des surfaces externes parallèles à son axe X-X de forme ellipsoïdale correspondant à la développante du cercle contenant les deux arcs calibrés de délimitation de l'alésage interne de l'écrou.

Dans le but d'emprisonner l'écrou, le dispositif de fixation ou raccordement de deux tubes ou tuyaux l'un à l'autre, de préférence la première des deux pièces, a la forme d'un raccord. Le dispositif emprisonne un écrou tel que défini ci-dessus et comprend un arbre présentant à son extrémité une gorge formée par l'élargissement terminant l'arbre et un épaulement. L'épaulement forme une butée délimitant le débattement de l'écrou. L'élargissement présente un diamètre extérieur au moins égal au diamètre du cercle comprenant les deux arcs calibrés de délimitation de l'alésage interne.

En vue d'obtenir une fixation aisée sans tourner les pièces l'une par rapport à l'autre, la pièce à fixer présente une extrémité filetée au diamètre et pas du taraudage de l'écrou.

Afin d'augmenter le diamètre de la gorge du produit destiné à être fixé et maintenant l'écrou tel que décrit ci-dessus , tournant à son extrémité, la deuxième extrémité de l'alésage interne dudit écrou présente un chanfrein.

Dans le but de transporter un liquide et afin d'assurer l'étanchéité, l'arbre est alésé, et le dispositif comprend une garniture d'étanchéité.

D'autres caractéristiques et avantages de l'invention apparaîtront à la lecture de la description qui va suivre, donnée à titre non limitatif, en se référant aux dessins annexés sur lesquels :
- la Fig. 1 représente en coupe partielle le dispositif selon l'invention, l'écrou tournant à l'extrémité de l'arbre devant être fixé à une autre pièce, l'arbre étant vu de face ;
- la Fig. 2 est une vue en perspective du dispositif suivant la Fig. 1 avant l'emprisonnement de l'écrou.

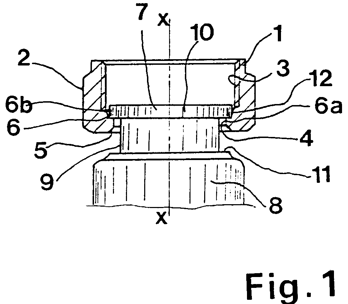

Comme représenté à la Fig. 1, l'invention concerne un dispositif d'emprisonnement d'un écrou qui comporte des faces externes de manoeuvre 2 et un alésage taraudé de fixation 3. L'écrou comprend un alésage interne 4 de diamètre inférieur à celui de l'alésage taraudé 3, débouchant par une première extrémité dans l'alésage taraudé 3 et à l'extérieur de l'écrou 1 par son autre extrémité qui présente un chanfrein 5.

L'écrou 1 est emprisonné à l'extrémité d'un arbre 8.

L'arbre 8 comprend un élargissement 10 à son extrémité.

Les arcs 6a, 6b et les bords 7 forment la périphérie de l'élargissement 10.

L'alésage 4 étant plus étroit que l'élargissement 10 et que les faces formant butées de l'épaulement 11, l'écrou 1 est maintenu prisonnier dans la gorge 9.

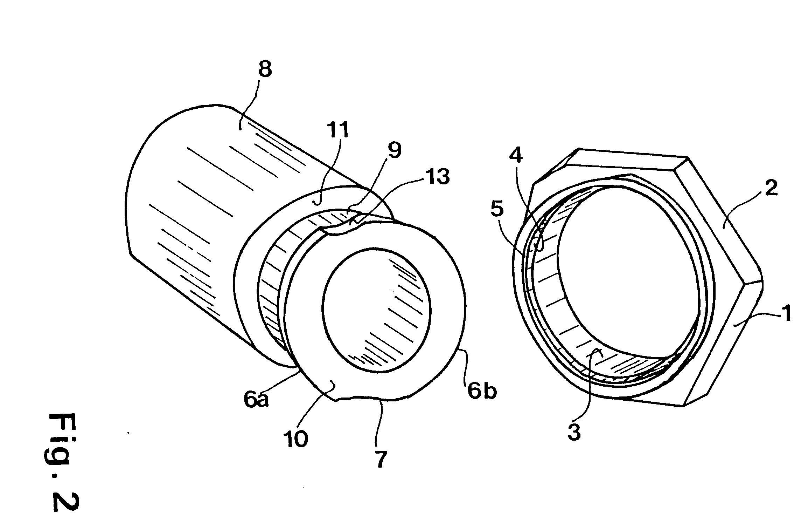

L'élargissement 10 de l'arbre 8 est délimité suivant un plan perpendiculaire à l'axe X-X et représenté en Fig. 2, par deux arcs 6a et 6b d'un cercle 6 et entre les deux arcs du cercle 6, des bords 7 calibrés à une distance du centre de l'alésage 4, laquelle est inférieure au rayon du cercle 6. De plus, les bords 7 présentent une forme ellipsoïdale correspondant à la développante du cercle 6 contenant les deux arcs calibrés 6a et 6b de délimitation de l'élargissement 10. Entre un des arcs du cercle 6 et les bords 7 l'élargissement 10 présente un resserrement 13.

L'extrémité de l'arbre 8 destinée à être fixée, par exemple un raccord d'axe X-X, présente à son extrémité une gorge 9 formée par l'élargissement 10 terminant l'extrémité dudit arbre 8 et un épaulement 11 formant butée. L'alésage interne 4 de l'écrou 1 vient se loger dans la gorge 9 dudit arbre 8.

Le raccordement entre chaque bord 7 et une extrémité de l'un 6a seulement des arcs de cercle 6 s'effectue sous forme d'un rétrécissement 13, tandis que du côté de l'autre arc de cercle 6b, les bords 7 se prolongent par ledit arc de cercle 6b.

L'alésage 4 de l'écrou 1 présente un diamètre inférieur au diamètre du cercle 6 comprenant les deux arcs calibrés de délimitation de l'élargissement 10.

Pour faciliter le positionnement sur l'élargissement 10 l'écrou 1 présente un cône de centrage 12 au niveau de la jonction entre les deux alésages 3 et 4.

Pour monter l'écrou 1 sur l'arbre ou raccord 8, on le présente incliné par rapport à l'axe X-X de l'arbre 8, l'arc du cercle 6a situé à proximité des resserrements 13 pénétrant dans l'alésage 4. Puis le chanfrein 5 venant au contact de la gorge 9 de l'arbre 8, on fait pivoter l'écrou 1 par rapport audit point de contact en le basculant vers l'arc du cercle 6b. La forme de l'élargissement 10 permet à l'alésage 4 de passer lors du pivotement de l'écrou 1. Ladite forme de l'élargissement 10 étant la développante du cercle correspondant au passage de l'écrou 1 par une inclinaison. L'écrou 1 est maintenu tournant à l'extrémité du tuyau 8, l'alésage 4 pouvant se déplacer dans la gorge 9, ce qui laisse un jeu suffisant pour visser une pièce dans l'écrou 1 et par conséquent la fixer à l'arbre 8.

## Revendications

**1.-** Dispositif d'emprisonnement d'un écrou (1) comportant des faces externes de manoeuvres, un alésage taraudé (3) et un alésage interne (4) débouchant par une première extrémité dans l'alésage (3) par sa deuxième extrémité, à l'extérieur de l'écrou (1), caractérisé en ce qu'il comporte un arbre (8) comprenant un élargissement (10) dans un plan perpendiculaire à son axe (X-X) délimité par deux arcs (6a, 6b) d'un cercle (6) et, entre les deux arcs du cercle (6), des bords (7) calibrés à une distance de son axe (X-X), inférieure au rayon du cercle (6), des surfaces externes (7) dudit dispositif parallèles à l'axe X-X sont de forme ellipsoïdale correspondant à la développante du cercle (6) contenant les deux arcs calibrés (6a, 6b) de délimitation de l'alésage interne (4) de l'écrou (1).

**2.-** Dispositif selon la revendication 1, l'alésage interne (4) de l'écrou étant d'un diamètre inférieur à l'alésage taraudé (3) caractérisé en ce que la plus grande distance des surfaces externes de l'élargissement par rapport à l'axe X-X est comprise entre les rayons de l'alésage interne (4) de l'écrou (1) et de l'alésage taraudé (3) de l'écrou (1).

**3.-** Dispositif selon l'une des revendications précédentes caractérisé en ce que la deuxième extrémité de l'alésage interne (4) de l'écrou (1) présente un chanfrein (5).

**4.-** Dispositif selon l'une quelconque des revendications 1 ou 2, caractérisé en ce que l'arbre comporte une butée (11), délimitant le débattement de l'écrou (1).

**5.-** Dispositif selon la revendication 3, caractérisé en ce que l'arbre présente une gorge entre son élargissement et la butée (11).

**6.-** Dispositif selon l'une des revendications précédentes, caractérisé en ce que l'arbre est alésé.

**7.-** Dispositif selon l'une des revendications 1 à 5, caractérisé en ce qu'il comprend une garniture d'étanchéité.

**8.-** Application du dispositif selon l'une quelconque des revendications 5 à 7 à la fixation d'une pièce présentant une extrémité filetée au diamètre et pas du taraudage de l'écrou (1).

**9.-** Application du dispositif selon l'une quelconque des revendications 1 à 7 au raccordement entre tubes ou tuyaux.
